# EUROPÄISCHE PATENTSCHRIFT

(11) **EP 4 581 341 B1**
(45) Veröffentlichungstag und Bekanntmachung des Hinweises auf die Patenterteilung: **21.10.2026**
(21) Anmeldenummer: 23761049.8
(22) Anmeldetag: 08.08.2023
(51) Int. Cl.: G01K 1/02, G01K 1/18, G01K 3/00, G01K 7/20, G01K 7/24, H01R 13/66

(54) **ELEKTRISCHE SCHALTUNG ZUR ÜBERWACHUNG DER JEWEILIGEN TEMPERATUR EINER MEHRZAHL VON LADEKONTAKTEN EINES LADESTECKVERBINDERS**
ELECTRIC CIRCUIT FOR MONITORING THE RESPECTIVE TEMPERATURE OF A PLURALITY OF CHARGING CONTACTS OF A CHARGING PLUG CONNECTOR
CIRCUIT ÉLECTRIQUE DE CONTRÔLE DE TEMPÉRATURES RESPECTIVES D'UNE PLURALITÉ DE CONTACTS DE CHARGE D'UN CONNECTEUR DE PRISE DE CHARGE

(30) Priorität: 01.09.2022 DE 102022122165
(43) Veröffentlichungstag der Anmeldung: 09.07.2025
(73) Patentinhaber: Kiekert Aktiengesellschaft, 42579 Heiligenhaus (DE)
(72) Erfinder: BERRES, Michael, 51069 Köln (DE); NÖVERMANN, Ingo, 45470 Mülheim an der Ruhr (DE)
(74) Vertreter: Kiekert AG Patentabteilung
(86) Internationale Anmeldenummer: PCT/DE2023/100581
(87) Internationale Veröffentlichungsnummer: WO 2024/046525

(56) Entgegenhaltungen:
- EP-B1- 3 677 886
- US-A1- 2005 206 347
- US-A1- 2009 138 241
- US-A1- 2021 364 367

## Beschreibung

Die Erfindung betrifft eine elektrische Schaltung zur Überwachung der jeweiligen Temperatur einer Mehrzahl von Ladekontakten eines Ladesteckverbinders für ein Elektro- oder Hybridfahrzeug, mit einer Mehrzahl von temperaturabhängigen Widerständen, die jeweils einem Ladekontakt zugeordnet und mit diesem thermisch koppelbar sind.

Elektro- und Hybridfahrzeuge verfügen über einen aufladbaren Energiespeicher, in der Regel eine Hochvolt-Batterie, die im Fahrbetrieb einem elektrischen Antriebsmotor Energie bereitstellt. Die Speicherkapazitäten dieser Hochvolt-Batterien sind begrenzt, so dass sie regelmäßig an einer Ladestation wieder aufgeladen werden muss. Das Laden der Batterie erfolgt über ein zwischen Ladestation und Fahrzeug vorgesehenes Ladekabel, wobei das Ladekabel z.B. gemäß der europäischen Norm IEC 62196 Typ 2 auf der einen Seite mit einem Ladestecker, der in eine an der Ladestation vorgesehene Ladesteckdose einsteckbar ist, und auf der anderen Seite mit einer Ladekupplung versehen ist, die mit einem im Elektro- und Hybridfahrzeug installierten Ladeeinbaustecker verbindbar ist. Vorliegend werden Ladesteckdosen, Ladestecker, Ladekupplungen und Ladeeinbaustecker unter dem Begriff "Ladesteckverbinder" subsummiert. Ladesteckdosen und Ladekupplungen weisen als Ladekontakte Kontakthülsen auf, und Ladestecker sowie in Elektro- oder Hybridfahrzeuge einbaubare Ladeeinbaustecker weisen als Ladekontakte Kontaktstifte auf, die in die Kontakthülsen einsteckbar sind.

Ladesteckverbinder für Elektro- und Hybridfahrzeuge unterliegen gesetzlichen und anwenderspezifischen Anforderungen was die Temperaturüberwachung von Wechselstrom- und Gleichstromladekontakten betrifft. Für Gleichstromladen wird in der Regel eine Temperaturmessung an beiden Gleichstromladekontakten gefordert. Hierzu wird ein zur Temperaturmessung geeignetes Bauelement, meist ein NTC-Widerstand, möglichst nahe an die Wärmequelle, also den Ladekontakt, gebracht, um in Echtzeit eine Temperaturüberwachung zur Ladeoptimierung und Sicherheitsüberwachung zu ermöglichen. Bei einem NTC-Widerstand handelt es sich um einen Widerstand, der in elektronischen Bauteilen eingesetzt wird. Er wird auch als Thermistor oder Heißleiter bezeichnet. Das Kürzel "NTC" steht für "negative temperature coefficient" und bezeichnet die Eigenschaft von Heißleitern, Strom mit steigender Temperatur besser zu leiten, da sie einen negativen Temperaturkoeffizienten aufweisen.

Für Wechselstromladen wird meist entweder ebenfalls eine NTC-Temperaturmessung gefordert oder eine einfacherer PTC-Temperaturüberwachung. Ein PTC-Widerstand, auch Kaltleiter oder PTC-Thermistor ("positive temperature coefficient") ist ebenfalls ein temperaturabhängiger Widerstand, der allerdings bei tiefen Temperaturen den elektrischen Strom besser als bei hohen Temperaturen leitet.

Der Unterschied zwischen dem Einsatz eines PTC-Elements und eines NTC-Elements liegt darin, dass ein NTC-Element eine echte Temperaturmessung ermöglicht, während ein PTC-Element meist ein nicht-lineares Verhalten des Widerstandes ab einer Schwelltemperatur aufweist und somit dazu genutzt werden kann, das Überschreiten einer kritischen Temperatur zu signalisieren. PTC-Elemente können damit zur Verwirklichung einer Art "Sicherung" dienen, indem sie einem auslesenden System einen sprunghaft ändernden Wert zurückgeben, wenn die kritische Temperatur überschritten worden ist.

Je nach Norm und Herstellerspezifikation ist eine echte Temperaturmessung oder nur eine Detektion des Überschreitens eines Temperaturschwellwertes erforderlich. Dies kann entweder für alle Wechselstromladekontakte (z.B. L1, L2, L3 und N bei Steckverbinder gemäß der europäischen Norm IEC 62196 Typ 2) separat für jeden Wechselstromladekontakt oder gebündelt, also für alle Wechselstromladekontakte gemeinsam, erforderlich sein.

Die DE 102015 106 251 A1 beschreibt eine Temperaturüberwachungseinrichtung mit einem flächig entlang einer Ebene erstrecktem Trägerelement mit einer Öffnung. Das Trägerelement kann dazu als Leiterplatte ausgebildet sein. Die Kontaktelemente sind Bestandteile einer Kontaktbaugruppe, die als modulare Einheit an einen Steckereinsatz angesetzt werden kann. Die Kontaktbaugruppe weist eine Temperaturüberwachungseinrichtung mit einem Trägerelement auf. Die Temperaturüberwachungseinrichtung dient dazu an zumindest solchen Kontaktelementen, die im Betrieb des Steckverbinderteils zum Übertragen von großen Strömen dienen, eine etwaige unzulässige Erwärmung zu detektieren. Für die notwendige Kontaktierung weist das Trägerelement an den Öffnungen jeweils eine metallische Beschichtung zur Bereitstellung einer Kontaktfläche in Form einer Durchkontaktierung auf. Eine Sensoreinrichtung 432 ist an dem Kopplungsabschnitt angeordnet, der die Wärme des Kontaktelements an die Sensoreinrichtung leitet. Von der Sensoreinrichtung wiederum führen Leiterbahnen hin zu einer übergeordneten Steuereinrichtung. An der Steuereinrichtung können die durch die Sensoreinrichtung generierten Sensorsignale ausgewertet werden, um in Abhängigkeit der Sensorsignale eine Steuerung der durch die Kontaktelemente fließenden Ströme vorzunehmen. Die Sensoreinrichtung kann für jedes zu überwachende Kontaktelement vorgesehen sein, sodass individuell die Temperatur an den einzelnen zu überwachenden Kontaktelementen überwacht und eine Erwärmung detektiert werden kann.

Die WO 2021/004765 A1 beschreibt eine elektrische Baugruppe mit einer Temperaturüberwachungseinrichtung. Beschrieben ist dabei ein Steckverbinderteil mit sowohl AC-Ladekontakten als auch DC-Ladekontakte. Zur Überwachung der möglichen Erwärmung, insbesondere an den DC-Ladekontakten, weist das Steckverbinderteil eine elektrische Baugruppe auf. Diese Baugruppe besteht aus Kontaktelementen, die auf einem Trägerelement angeordnet und mit zugeordneten Lastleitungen elektrisch verbunden sind. Jedes Kontaktelement ist dazu in einer zugeordneten Aufnahmeöffnung des Trägerelements aufgenommen. Eine Temperaturüberwachungseinrichtung weist einen Temperatursensor auf. Die Temperaturüberwachungseinrichtung ist an der Oberfläche des Trägerelements fixiert. Die Wärme des Kontaktelements wird zu der Temperaturüberwachungseinrichtung hingeleitet.

EP 3 677 886 B1 beschreibt eine elektrische Schaltung zur Überwachung der jeweiligen Temperatur einer Mehrzahl von Ladekontakten eines Ladesteckverbinders für ein Elektrooder Hybridfahrzeug, mit einer Mehrzahl von temperaturabhängigen Widerständen.

Davon ausgehend ist es die Aufgabe der Erfindung, auf einfache und verlässliche Weise zu bestimmen welcher Ladekontakt einer Vielzahl von Ladekontakten eines Ladesteckverbinders für ein Elektro- oder Hybridfahrzeug im Betrieb eine kritische Erwärmung zeigt.

Diese Aufgabe wird durch die Gegenstände des unabhängigen Anspruchs gelöst. Bevorzugte Weiterbildungen der Erfindung sind in den Unteransprüchen beschrieben.

Erfindungsgemäß ist somit eine elektrische Schaltung zur Überwachung der jeweiligen Temperatur einer Mehrzahl von Ladekontakten eines Ladesteckverbinders für ein Elektro- oder Hybridfahrzeug vorgesehen, mit einer Mehrzahl von temperaturabhängigen Widerständen, die jeweils einem Ladekontakt zugeordnet und mit diesem thermisch koppelbar sind, und einer Mehrzahl von Konstantwiderständen mit einem jeweiligen konstanten Widerstandswert, wobei jeder temperaturabhängige Widerstand mit einem der Konstant widerstände verschaltet ist, eine Parallelschaltung vorgesehen ist, gemäß der die Verschaltungen aus einem jeweiligen temperaturabhängigen Widerstand und einem jeweiligen Konstantwiderstand zueinander parallel geschaltet sind, die Konstantwiderstände alle voneinander verschiedene Widerstandswerte aufweisen und eine Spannungsmesseinrichtung vorgesehen ist, mit der die über die Parallelschaltung abfallende Spannung bestimmbar ist.

Es ist somit ein wesentlicher Aspekt der Erfindung, den elektrischen Pfad über einen jeweiligen temperaturabhängigen Widerstand zu "kodieren", und zwar mittels eines Konstantwiderstands, dessen Widerstandswert von den Widerstandswerten aller anderen im Pfad von anderen temperaturabhängigen Widerständen angeordneten Konstantwiderständen verschieden ist. Es liegen also für jeden Ladekontakt, dessen Temperatur überwacht werden soll, eine Reihenschaltung von einem temperaturabhängigen Widerstand und einem Konstantwiderstand vor, wobei der temperaturabhängige Widerstand zur Erfassung der Temperatur des jeweiligen Ladekontakts vorgesehen ist. Diese Reihenschaltungen sind zueinander parallelgeschaltet, so dass sich der Gesamtwiderstand dieser Parallelschaltung sich in Abhängigkeit davon individuell ändert, welcher der temperaturabhängigen Widerstände einen erhöhten Widerstandswert zeigt, da der Ladekontakt, dem er zugeordnet ist, sich über eine kritische Temperatur hinaus erwärmt hat.

Eine alternative Umsetzung der Erfindung erfolgt gemäß einer bevorzugten Weiterbildung der Erfindung derart, dass die erfindungsgemäße elektrische Schaltung zusätzlich mit einer Mehrzahl von Transistoren versehen ist, wobei solche Verschaltungen vorgesehen sind, gemäß derer jeweils ein temperaturabhängiger Widerstand an die Basis eines jeweiligen Transistors angeschaltet ist und die Konstantwiderstände mit jeweils einem Transistor über dessen beide andere Anschlüsse in Reihe geschaltet sind und eine Parallelschaltung vorgesehen ist, gemäß der die Verschaltungen aus jeweils einem Konstantwiderstand, jeweils einem Transistor und jeweils einem temperaturabhängigen Widerstand parallel zueinander geschaltet sind.

Gemäß dieser bevorzugten Ausgestaltung der Erfindung wird also für jeden Ladekontakt ein Transistor verwendet, der an seiner jeweiligen Basis über eine Schaltung mit einem temperaturabhängigen Widerstand vorgesteuert ist. Dabei ist der temperaturabhängige Widerstand vorzugsweise ein PTC-Element oder ein NTC-Element. Handelt es sich um ein PTC-Element, so wird das PTC-Element beim Erreichen einer vordefinierten Grenztemperatur am Ladekontakt hochohmig, was einen Spannungsabfall an der Transistorbasis hervorruft, so dass der Transistor sperrt. Wird ein NTC-Element verwendet, so gilt, dass beim Erreichen der Grenztemperatur am Ladekontakt das NTC-Element niederohmig wird, was einen Spannungsanstieg an der Transistorbasis hervorruft, so dass der Transistor durchschaltet. Eine "Kodierung" der elektrischen Pfade wird hier also darüber erreicht, dass der Konstantwiderstand des jeweiligen elektrischen Pfades mittels des Transistors "eingeschaltet" bzw. "ausgeschaltet" wird.

Die nachfolgend beschriebenen bevorzugten Weiterbildungen der Erfindung gelten für die Erfindung im Allgemeinen und damit auch für die beiden zuvor genannten Alternativen.

Vorzugsweise sind die temperaturabhängigen Widerstände alle vom selben Typ und zeigen dieselbe Abhängigkeit ihres Widerstands von der Temperatur. Bei dieser bevorzugten Ausgestaltung der Erfindung ist es vorteilhaft, dass nicht darauf geachtet werden muss, dass die jeweiligen Widerstandswerte von temperaturabhängigem Widerstand und Konstantwiderstand immer derart zueinander passen, dass insgesamt ein individueller Widerstandswert erzielt wird, der die erfindungsgemäße Funktion ermöglicht, dass mittels des Gesamtwiderstands der Parallelschaltung auf den temperaturabhängigen Widerstand zurückgeschlossen werden kann, der sich an dem Ladekontakt befindet, dessen Temperatur eine kritische Temperatur überschritten hat.

Grundsätzlich sind unterschiedliche temperaturabhängige Widerstände im Rahmen der Erfindung einsetzbar. Wie zuvor schon angesprochen, sind gemäß einer bevorzugten Weiterbildung der Erfindung die temperaturabhängigen Widerstände jedoch PTC-Elemente oder NTC-Elemente. Der Widerstandsverlauf eines PTC-Elements ist in der Regel nicht-linear und kann z.B. in einem Temperaturbereich von -40°C bis 90°C im Bereich von 618 bis 1350 Ω liegen. Oberhalb von 90°C steigt der Widerstand dann schnell deutlich an, so dass er bei 100°C bereits bei ca. 10000 Ω liegt. Oberhalb von 90°C/1350 Ω liegt damit eine Auslöseschwelle vor, die verwendet werden kann, um eine kritische Temperatur zu detektieren.

Die Erfindung fordert vorerst nur, dass die Konstantwiderstände alle unterschiedliche Widerstandswerte aufweisen. Die Erfassung des temperaturabhängigen Widerstands, der eine kritische Temperaturerhöhung erfasst hat, über den Gesamtwiderstand der Parallelschaltung funktioniert jedoch dann ganz besonders verlässlich, wenn der Widerstandswert des Konstantwiderstands mit dem zweitgeringsten Widerstandswert wenigstens doppelt so groß ist wie der Widerstandswert des Konstantwiderstands mit dem geringsten Widerstandswert. Vorzugsweise gilt weiterhin, dass der jeweilige Unterschied zwischen den Widerstandswerten aller Konstantwiderstände wenigstens dem Unterschied zwischen dem Widerstandswert des Konstantwiderstands mit dem zweitgeringsten Widerstandswert und dem Widerstandswert des Konstantwiderstands mit dem geringsten Widerstandswert entspricht. Mit anderen Worten bedeutet das, dass der Unterschied der Widerstandswerte von zwei beliebigen Konstantwiderständen wenigstens so groß ist, wie der Unterschied zwischen dem Widerstand des Konstantwiderstands mit dem zweitgeringsten Widerstandswert und dem Widerstandswert des Konstantwiderstands mit dem geringsten Widerstandswert.

Ganz besonders bevorzugt ist es in diesem Zusammenhang, dass, ausgenommen vom Konstantwiderstand mit dem geringsten Widerstandswert, der Widerstandswert eines jeden Konstantwiderstand wenigstens das Doppelte des Widerstandswerts des Konstantwiderstands mit dem nächstkleineren Widerstandswert beträgt. Das bedeutet, dass die Unterschiede zwischen den Widerstandswerten umso größer werden, je größer die Widerstandswerte selbst sind. Eine bevorzugte Ausgestaltung liegt in diesem Zusammenhang darin, dass die Widerstandswerte der Konstantwiderstände der Gesetzmäßigkeit einer divergierenden geometrischen Reihe folgen. Die Berechnung der Widerstandswerte bei n Konstantwiderständen ist dabei z. B. mittels der folgenden Formel möglich: ${R}_{1} {\sum }_{k = 0}^{n} {q}^{k} = \left\{{R}_{1},…,{R}_{n}\right\}$ wobei
- R₁: der Widerstandswerte des Konstantwiderstands mit dem geringsten Widerstandswert ist,
- Rₙ: der Widerstandswerte des Konstantwiderstands mit dem größten Widerstandswert ist und
- q: ein beliebiger Wert größer 1 ist.

In diesem Zusammenhang ist es ganz besonders bevorzugt, dass q größer oder gleich 2 ist.

Eine Ausgestaltung betrifft weiterhin eine elektrische Leiterplatte zum Einbau in einen Ladesteckverbinder für ein Elektro- oder Hybridfahrzeug, mit einer elektrischen Schaltung wie zuvor beschrieben.

Gemäß einer bevorzugten Weiterbildung der Erfindung ist die elektrische Leiterplatte dabei so ausgestaltet, dass die temperaturabhängigen Widerstände an thermischen Kontaktstellen der elektrischen Leiterplatte zum thermischen Kontaktieren eines jeweiligen Ladekontakts des Ladesteckverbinders angeordnet sind und die thermischen Kontaktstellen mit thermischen Kontaktelementen versehen sind, die in direktem thermischen Kontakt mit einem jeweiligen temperaturabhängigen Widerstand stehen und mit denen die Ladekontakte körperlich kontaktierbar sind. Eine derartige elektrische Leiterplatte kann derart in einem Ladesteckverbinder angeordnet werden, dass sie sich sozusagen "zwischen" den Ladekontakten befindet und dabei mit ihren thermischen Kontaktelementen in direkten thermischen Kontakt mit den Ladekontakten kommt. Auf diese Weise stehen die thermischen Kontaktelemente im Wesentlichen im thermischen Gleichgewicht mit den Ladekontakten, so dass die temperaturabhängigen Widerstände annähernd in Echtzeit die an einem jeweiligen Ladekontakt herrschende Temperatur erfassen können.

In diesem Zusammenhang ist es ganz besonders bevorzugt, dass die thermischen Kontaktstellen von Aussparungen in der elektrischen Leiterplatte gebildet sind, vorzugsweise von teilkreisförmigen Aussparungen. Derartige teilkreisförmige Aussparungen können sich direkt an kreisförmige Ladekontakte anschmiegen und so einen sehr guten Wärmeübertrag gewährleisten.

Eine Ausgestaltung betrifft weiterhin einen Ladesteckverbinder für ein Elektro- oder Hybridfahrzeug mit einer elektrischen Schaltung wie zuvor beschrieben oder mit einer elektrischen Leiterplatte wie zuvor beschrieben. Dabei ist es ganz besonders bevorzugt, dass die temperaturabhängigen Widerstände derart angeordnet sind, dass mit ihnen die jeweilige Temperatur eines Wechselstromladekontakts erfassbar ist. Häufig sind nämlich in einem derartigen Ladesteckverbinder mehr als zwei Wechselstromkontakte vorgesehen, so dass auf diese Weise, nämlich mit der zuvor beschriebenen elektrischen Schaltung, auf effiziente Art und Weise individuell an jedem Wechselstromladekontakt die aktuelle Temperatur erfassbar ist. Dabei handelt es sich bei dem Ladesteckverbinder vorzugsweise um einen Ladeeinbaustecker, der in die Karosserie eines Elektro- oder Hybridfahrzeugs eingebaut werden kann. Zum Beispiel handelt es sich dabei um einen Ladeeinbaustecker gemäß der europäischen Norm IEC 62196 Typ 2 oder gemäß der US-Norm SAEJ1772.

Nachfolgend wird die Erfindung unter Bezugnahme auf die Zeichnungen anhand bevorzugter Ausführungsbeispiele weiter im Detail beschrieben.

In den Zeichnungen zeigen
- Fig. 1: schematisch eine elektrische Schaltung gemäß einem ersten bevorzugten Ausführungsbeispiel der Erfindung,
- Fig. 2: das temperaturabhängigen Widerstandsverhalten eines PTC-Elements als temperaturabhängigen Widerstand in der Schaltung gemäß Fig. 1,
- Fig. 3: der temperaturabhängige Verlauf der Messspannung in der in Fig. 1 gezeigten Schaltung für die verschiedenen Wechselstromladekontakte eines Ladesteckverbinders bei Verwendung der Schaltung aus Fig. 1,
- Fig. 4: ein Ladesteckverbinder mit einer die in Fig. 1 gezeigte elektrische Schaltung tragenden elektrischen Leiterplatte,
- Fig. 5a: schematisch eine elektrische Schaltung gemäß einem zweiten bevorzugten Ausführungsbeispiel der Erfindung und
- Fig. 5b: die einzelnen Verschaltungen der elektrischen Schaltung aus Fig. 5a im Detail.

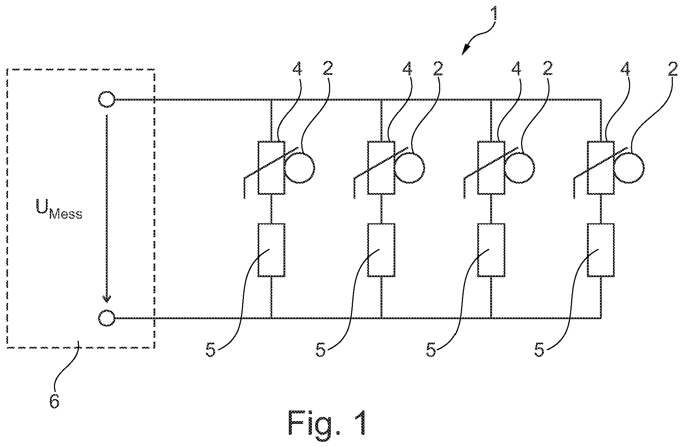

Aus Fig. 1 ist schematisch eine elektrische Schaltung 1 gemäß einem bevorzugten Ausführungsbeispiel der Erfindung ersichtlich. Nicht Bestandteil der elektrischen Schaltung 1, aber in Fig. 1 bereits dargestellt, sind Ladekontakte 2 eines Ladesteckverbinders für ein Elektro- oder Hybridfahrzeug, deren jejeweilige Temperatur überwacht werden soll.

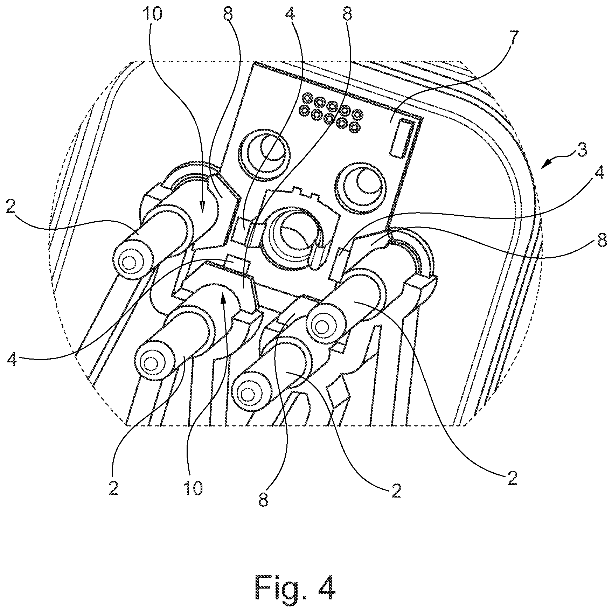

Die elektrische Schaltung 1 gemäß dem vorliegend beschriebenen bevorzugten Ausführungsbeispiel der Erfindung weist temperaturabhängige Widerstände 4 und Konstantwiderstände 5 auf. Dabei ist jeweils ein temperaturabhängiger Widerstand 4 mit einem Konstantwiderstand 5 in Reihe geschaltet. Die Erläuterung des hier beschriebenen bevorzugten Ausführungsbeispiels der Erfindung erfolgt anhand eines ausschnittsweise in Fig. 4 gezeigten Ladesteckverbinders 3 in Form eines in eine Karosserie eines Elektro- oder Hybridfahrzeugs einbaubaren Ladeeinbausteckers gemäß der europäischen Norm IEC 62196 Typ 2. Dabei sind die in Fig. 1 dargestellten Ladekontakte 2 die Wechselstromkontakte des Ladeeinbausteckers 3, die gemäß der vorliegenden Norm mit L1, L2, L3 und N bezeichnet werden. Insofern liegen vorliegend vier Ladekontakte 2 vor, deren jeweilige Temperatur überwacht werden soll. Daher sind auch vier Paare aus jeweils einem temperaturabhängigen Widerstand 4 und einem Konstantwiderstand 5 vorgesehen, die jeweils zueinander in Reihe geschaltet sind. Diese vier Reihenschaltungen sind parallel geschaltet, wobei eine Spannungsmesseinrichtung 6 vorgesehen ist, mit der die über die Parallelschaltung abfallende Spannung bestimmbar ist.

Ein wesentlicher Aspekt liegt nun darin, dass die temperaturabhängigen Widerstände 4 alle vom selben Typ eines PTC-Elements ausgebildet sind, also alle dasselbe temperaturabhängige Widerstandsverhalten zeigen. Im Gegensatz dazu sind die Konstantwiderstände insofern alle voneinander verschieden, als dass alle Konstantwiderstände unterschiedliche Widerstandswerte aufweisen.

Dabei ist es vorliegend so, dass die Konstantwiderstände 5 verschiedene Widerstandswerte aufweisen, die der Gesetzmäßigkeit einer divergierenden geometrischen Riehe folgen. Konkret liegen die Widerstandswerte bei 200 Ω, 400 Ω, 800 Ω und 1600 Ω. Auf diese Weise liegen die Widerstandswerte der Konstantwiderstände 5 nicht zu dicht beieinander, so dass es kein Problem darstellt, dass aufgrund der Temperaturabhängigkeit des temperaturabhängigen Widerstands 4 der Widerstandswert einer jeweiligen Reihenschaltung grundsätzlich schon mit der Temperatur schwankt, bevor die Auslöseschwelle eines jeweiligen PTC-Elements erreicht ist.

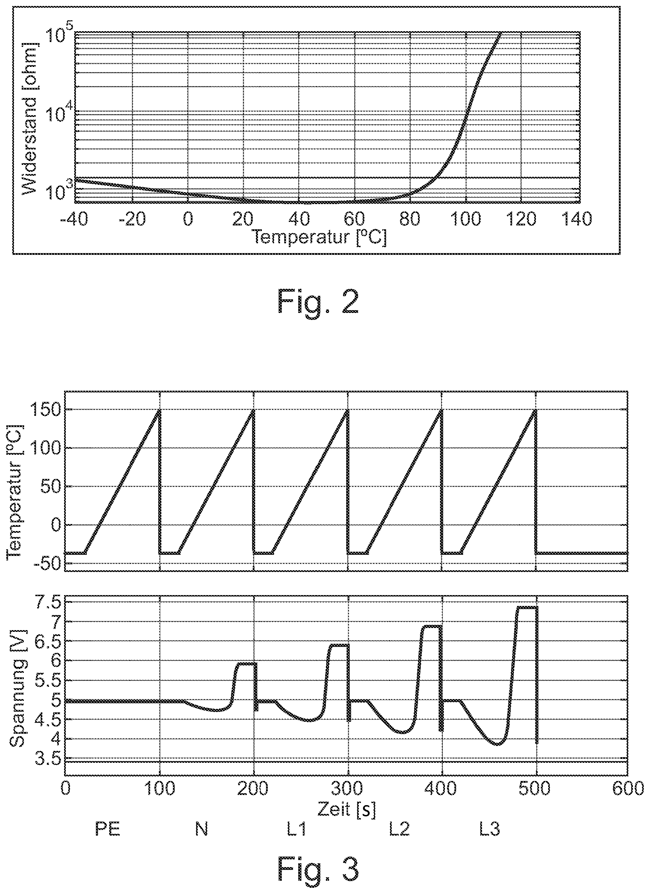

Hinsichtlich des temperaturabhängigen Widerstandsverhaltens und der Auslöseschwelle der PTC-Elemente, die als temperaturabhängige Widerstände 4 vorgesehen sind, sei auf Fig. 2 verwiesen. Dort ist dargestellt, wie sich der Widerstand der vorliegend verwendeten PTC-Elemente in Abhängigkeit von der Temperatur ändert. Es ist erkennbar, dass der Widerstand der PTC-Elemente in dem Temperaturbereich von -40°C bis 90°C im Bereich zwischen 618 und 1350 Ω liegt. Oberhalb von 90°C steigt der Widerstand der PTC-Elemente stark an, so dass bereits bei 100°C ein Widerstandswert von ca. 10000 Ω vorliegt. Die Auslöseschwelle liegt also hier in einem Bereich über 1350 Ohm.

Damit ergibt sich ein Widerstandsverhalten der in Fig. 1 gezeigten Parallelschaltung der jeweiligen Paare eines temperaturabhängigen Widerstands 4 und eines Konstantwiderstands 5, das mittels der Messspannung U_{Mess} beschrieben wird, die ihrerseits mittels der Spannungsmesseinrichtung 6 erfasst worden ist. Das Widerstandsverhalten ist in Fig. 3 dargestellt.

Fig. 3 zeigt in ihrem oberen Bereich die Temperatur, die zuerst an den gemäß der vorliegenden Norm mit PE bezeichneten Ladekontakt 2 und nachfolgend an die Ladekontakte N1, L1, L2 und L3 angelegt worden ist. Da sich an dem Ladekontakt mit der Bezeichnung PE kein temperaturabhängiger Widerstand und auch kein Konstantwiderstand befindet, führt die Temperaturabhängigkeit hier zu keiner Änderung der mittels der Spannungsmesseinrichtung 6 erfassten Spannung. Die Ladekontakte 2 mit den Bezeichnungen N, L1, L2 und L3 sind jedoch jeweils mit einem Paar aus einem temperaturabhängigen Widerstand 4 und einem Konstantwiderstand 5 versehen. Aufgrund der in Fig. 2 dargestellten temperaturabhängigen Widerstandscharakteristik der temperaturabhängigen Widerstände 4 ergibt sich damit ein Verlauf des Gesamtwiderstands der in Fig. 1 gezeigten elektrischen Schaltung 1, die zu den in Fig. 3 gezeigten Spannungsverläufen führt.

Von der Form her sind bei der Temperaturerhöhung die verschiedenen Spannungsverläufen an den Ladekontakten 2 mit den Bezeichnungen N, L1, L2 und L3 qualitativ alle gleich. Aufgrund der unterschiedlichen Widerstandswerte der jeweiligen Konstantwiderstände 5 ist es jedoch so, dass sich auf dem Weg zur Auslöseschwelle des jeweiligen PTC-Elements quantitativ unterschiedliche Spannungen ergeben. Konkret wird bei dem Ladekontakt 2 mit der Bezeichnung N die Auslöseschwelle erreicht, wenn die Spannungsmesseinrichtung 6 einen Wert von etwa 6 V misst. Dieser Spannungswert erhöht sich sukzessive für die Spannungskontakte 2 mit den Bezeichnungen L1, L2 und L3 auf etwa 6,4 V, 6,8 V und 7,2 V. Auf diese Weise ist jeder Widerstandspfad, der einem jeweiligen Ladekontakt 2 zugeordnet ist, quasi "kodiert", da über den sich ergebenden Gesamtwiderstand der Schaltung 1, der seinerseits aufgrund der Messspannung U_{Mess} ermittelbar ist, festgestellt werden kann, auf die Temperaturerhöhung welches Ladekontakts 2 die Veränderung des Gesamtwiderstands der elektrischen Schaltung 1 zurückgeht.

Im Weiteren sei nochmals auf Fig. 4 verwiesen, die ausschnittsweise einen Ladeeinbaustecker 1 gemäß der europäischen Norm IEC 62196 Typ 2 zeigt. Aus Fig. 4 ist erkennbar, dass praktisch "zwischen" die Ladekontakte 2 des Ladeeinbausteckers 3 eine elektrische Leiterplatte 7 eingesetzt ist, auf der die temperaturabhängigen Widerstände 4 angeordnet sind. Der Übersichtlichkeit halber sind vorliegend die Konstantwiderstände 5 nicht dargestellt. Die temperaturabhängigen Widerstände sind mit thermischen Kontaktelementen 8 gekoppelt, die sich in jeweiligen teilkreisförmigen Ausschnitten 10 der Leiterplatte 7 befinden. Diese thermischen Kontaktelemente 8 kontaktieren damit einen jeweiligen Ladekontakt 2 direkt, so dass ein sehr guter Wärmeaustausch zwischen dem jeweiligen Ladekontakt 2 und dem jeweiligen temperaturabhängigen Widerstand 4 erzielbar ist. Auf diese Weise kann mit den temperaturabhängigen Widerständen 4 annähernd in Echtzeit die jeweilige Temperatur eines Ladekontakts 2 bestimmt werden. Durch das zusätzliche Vorsehen der in Fig. 1 gezeigten elektrischen Schaltung 1, die ebenfalls der Übersichtlichkeit halber in Fig. 4 nicht dargestellt ist, kann wie zuvor beschrieben, genau bestimmt werden, an welchem Ladekontakt 2 die Temperaturerhöhung erfolgt ist, die zu einer Änderung des von der Spannungsmesseinrichtung 6 gemessenen Messspannung U_{Mess} zurückzuführen ist.

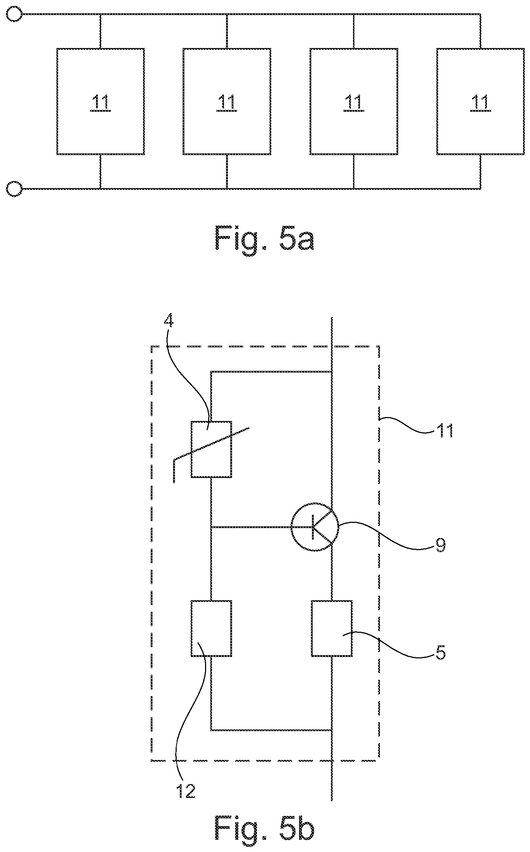

Aus Fig. 5a ist nun schematisch eine elektrische Schaltung gemäß einem zweiten bevorzugten Ausführungsbeispiel der Erfindung ersichtlich. Dabei sind vier Verschaltungen 11 parallel geschaltet, wobei die einzelnen Verschaltungen 11 aufgebaut sind, wie schematisch in Fig. 5b dargestellt:
Jede Verschaltung 11 weist einen Transistoren 9 auf, wobei jeweils ein temperaturabhängiger Widerstand 4 an die Basis eines jeweiligen Transistors 9 angeschaltet ist. Außerdem ist jeweils ein Konstantwiderstand 5 mit jeweils einem Transistor **9** über dessen beiden anderen Anschlüsse in Reihe geschaltet. Die Konstantwiderstände 5 weisen alle unterschiedliche feste Widerstandswerte auf und jeder Konstantwiderstand 5 ist mit seinem dem jeweiligen Transistor 9 abgewandten Ende über einen jeweiligen Hilfskonstantwiderstand 12 mit dem jeweiligen temperaturabhängigen Widerstand 4 verbunden.

Das zweite bevorzugte Ausführungsbeispiel der Erfindung bietet nun zwei Optionen: Handelt es sich bei den temperaturabhängigen Widerständen 4 jeweils um ein PTC-Element, so wird das PTC-Element beim Erreichen einer vordefinierten Grenztemperatur am Ladekontakt hochohmig, was einen Spannungsabfall an der Transistorbasis hervorruft, so dass der Transistor 9 sperrt. Wird allerdings ein NTC-Element verwendet, so gilt, dass beim Erreichen der Grenztemperatur am Ladekontakt das NTC-Element niederohmig wird, was einen Spannungsanstieg an der Transistorbasis hervorruft, so dass der Transistor 9 durchschaltet. Damit kann ein jeweiliger elektrischer Pfad mittels des jeweiligen Transistors 9 quasi "eingeschaltet" bzw. "ausgeschaltet" werden, so dass über die entsprechende Veränderung des Gesamtwiderstands der elektrischen Schaltung auf den Ladekontakt rückgeschlossen werden kann, an dem die Grenztemperatur überschritten worden ist.

### Bezugszeichenliste

- 1: elektrische Schaltung
- 2: Ladekontakte
- 3: Ladesteckverbinder/Ladeeinbaustecker
- 4: temperaturabhängige Widerstände
- 5: Konstantwiderstände
- 6: Spannungsmesseinrichtung
- 7: elektrische Leiterplatte
- 8: thermischen Kontaktelemente
- 9: Transistoren
- 10: Aussparungen
- 11: Verschaltung
- 12: Hilfskonstantwiderstände

## Patentansprüche

1. Elektrische Schaltung (1) zur Überwachung der jeweiligen Temperatur einer Mehrzahl von Ladekontakten (2) eines Ladesteckverbinders (3) für ein Elektro- oder Hybridfahrzeug,
mit einer Mehrzahl von temperaturabhängigen Widerständen (4), die jeweils einem Ladekontakt (2) zugeordnet und mit diesem thermisch koppelbar sind, und
einer Mehrzahl von Konstantwiderständen (5) mit einem jeweiligen konstanten Widerstandswert,
wobei jeder temperaturabhängige Widerstand (4) mit einem der Konstantwiderstände (5) verschaltet ist, **dadurch gekennzeichnet, dass**
eine Parallelschaltung vorgesehen ist, gemäß der die Verschaltungen aus einem jeweiligen temperaturabhängigen Widerstand (4) und einem jeweiligen Konstantwiderstand (5) zueinander parallel geschaltet sind,
die Konstantwiderstände (5) alle voneinander verschiedene Widerstandswerte aufweisen und
eine Spannungsmesseinrichtung (6) vorgesehen ist, mit der die über die Parallelschaltung abfallende Spannung bestimmbar ist.

2. Elektrische Schaltung (1) nach Anspruch 1, wobei
zu jedem temperaturabhängigen Widerstand (4) einer der Konstantwiderstände (5) in Reihe geschaltet ist und
eine Parallelschaltung vorgesehen ist, gemäß der die Reihenschaltungen aus einem jeweiligen temperaturabhängigen Widerstand (4) und einem jeweiligen Konstantwiderstand (5) zueinander parallel geschaltet sind.

3. Elektrische Schaltung (1) nach Anspruch 1, zusätzlich mit einer Mehrzahl von Transistoren (9),
wobei solche Verschaltungen (11) vorgesehen sind, gemäß derer jeweils ein temperaturabhängiger Widerstand (4) an die Basis eines jeweiligen Transistors (9) angeschaltet ist und die Konstantwiderstände (5) mit jeweils einem Transistor (9) über dessen beide andere Anschlüsse in Reihe geschaltet sind und
eine Parallelschaltung vorgesehen ist, gemäß der die Verschaltungen (11) aus jeweils einem Konstantwiderstand (5), jeweils einem Transistor (9) und jeweils einem temperaturabhängigen Widerstand (4) parallel zueinander geschaltet sind.

4. Elektrische Schaltung (1) nach einem der vorherigen Ansprüche, wobei die temperaturabhängigen Widerstände (4) alle vom selben Typ sind und dieselbe Abhängigkeit ihres Widerstandes von der Temperatur aufweisen.

5. Elektrische Schaltung (1) nach einem der vorherigen Ansprüche, wobei der Widerstandswert des Konstantwiderstands (5) mit dem zweitgeringsten Widerstandswert wenigstens doppelt so groß ist wie der Widerstandswert des Konstantwiderstands (5) mit dem geringsten Widerstandswert.

6. Elektrische Schaltung (1) nach Anspruch 5, wobei der jeweilige Unterschied zwischen den Widerstandswerten aller Konstantwiderstände (5) wenigstens dem Unterschied zwischen dem Widerstandswert des Konstantwiderstands (5) mit dem zweitgeringsten Widerstandswert und dem Widerstandswert des Konstantwiderstands (5) mit dem geringsten Widerstandswert entspricht.

7. Elektrische Schaltung (1) nach Anspruch 5 oder 6, wobei, ausgenommen vom Konstantwiderstand (5) mit dem geringsten Widerstandswert, der Widerstandswert eines jeden Konstantwiderstands (5) wenigstens das Doppelte des Widerstandswertes des Konstantwiderstands (5) mit dem nächst kleineren Widerstandswert beträgt.

8. Elektrische Schaltung (1) nach einem der Ansprüche 5 bis 7, wobei die Widerstandswerte der Konstantwiderstände (5) der Gesetzmäßigkeit einer divergierenden geometrischen Reihe folgen.

9. Elektrische Schaltung (1) nach Anspruch 8, wobei für die Widerstandswerte R₁, ..., Rₙ der Konstantwiderstände (5) die folgende Formel gilt ${R}_{1} {\sum }_{k = 0}^{n} {q}^{k} = \left\{{R}_{1},…,{R}_{n}\right\}$ wobei
R₁ der Widerstandswerte des Konstantwiderstands (5) mit dem geringsten Widerstandswert ist,
Rₙ der Widerstandswerte des Konstantwiderstands (5) mit dem größten Widerstandswert ist und
q ein beliebiger Wert größer 1 ist.

10. Elektrische Leiterplatte (7) zum Einbau in einen Ladesteckverbinder (3) für ein Elektro- oder Hybridfahrzeug, mit einer elektrischen Schaltung (1) gemäß einem der vorhergehenden Ansprüche.

11. Elektrische Leiterplatte (7) nach Anspruch 10, wobei die temperaturabhängigen Widerstände (4) an thermischen Kontaktstellen der elektrischen Leiterplatte (7) zum thermischen Kontaktieren eines jeweiligen Ladekontakts (2) des Ladesteckverbinders (3) angeordnet sind und die thermischen Kontaktstellen mit thermischen Kontaktelementen(8) versehen sind, die in direktem thermischen Kontakt mit einem jeweiligen temperaturabhängigen Widerstand (4) stehen und mit denen die Ladekontakte (2) körperlich kontaktierbar sind.

12. Elektrische Leiterplatte (7) nach Anspruch 11, wobei die thermischen Kontaktstellen von Aussparungen (10) in der elektrischen Leiterplatte (7) gebildet sind.

13. Ladesteckverbinder (3) für ein Elektro- oder Hybridfahrzeug mit einer elektrischen Schaltung (1) gemäß einem der Ansprüche 1 bis 10 oder mit einer elektrischen Leiterplatte (7) gemäß Anspruch 12.

14. Ladesteckverbinder (3) nach Anspruch 13, wobei die temperaturabhängigen Widerstände (4) derart angeordnet sind, dass mit ihnen die jeweilige Temperatur eines Wechselstromladekontakts (2) erfassbar ist.

15. Ladesteckverbinder nach Anspruch 13 oder 14, wobei der Ladesteckverbinder (3) als ein in der Karosserie eines Elektro- oder Hybridfahrzeugs installierbarer Ladeeinbaustecker ausgebildet ist.

## Claims

1. An electric circuit (1) for monitoring the corresponding temperature of a plurality of charging contacts (2) of a charging plug connector (3) for an electric or hybrid vehicle,
comprising a plurality of temperature-based resistors (4), each of which is paired with a charging contact (2) and can be thermally coupled thereto, and
a plurality of constant resistors (5), each of which has a constant resistance,
each temperature-based resistor (4) being connected to one of the constant resistors (5), **characterized in that**
a parallel circuit is provided, according to which the interconnections consisting of a corresponding temperature-based resistor (4) and a corresponding constant resistor (5) are connected together in parallel,
all of the constant resistors (5) have different resistances, and
a voltage measuring device (6) is provided, by means of which the voltage dropping across the parallel circuit can be determined.

2. The electric circuit (1) according to claim 1, wherein
each of the temperature-based resistors (4) is connected to one of the constant resistors (5) in series and
a parallel circuit is provided, according to which the series circuits consisting of a corresponding temperature-based resistor (4) and a corresponding constant resistor (5) are connected together in parallel.

3. The electric circuit (1) according to claim 1, additionally comprising a plurality of transistors (9),
wherein such interconnections (11) are provided, according to which each temperature-based resistor (4) is connected to the base of a corresponding transistor (9) and the constant resistors (5) are each connected in series with a transistor (9) via its two other terminals, and
a parallel circuit is provided, according to which the interconnections (11), each consisting of a constant resistor (5), a transistor (9) and a temperature-based resistor (4), are connected together in parallel.

4. The electric circuit (1) according to any of the preceding claims, wherein the temperature-based resistors (4) are all of the same type and have the same dependence of their resistance on temperature.

5. The electric circuit (1) according to any of the preceding claims, wherein the resistance of the constant resistor (5) with the second lowest resistance is at least twice as high as the resistance of the constant resistor (5) with the lowest resistance.

6. The electric circuit (1) according to claim 5, wherein the corresponding difference between the resistances of all constant resistors (5) corresponds at least to the difference between the resistance of the constant resistor (5) with the second lowest resistance and the resistance of the constant resistor (5) with the lowest resistance.

7. The electric circuit (1) according to either claim 5 or claim 6, wherein, except for the constant resistor (5) with the lowest resistance, the resistance of each constant resistor (5) is at least twice the resistance of the constant resistor (5) with the next smallest resistance.

8. The electric circuit (1) according to any of claims 5 to 7, wherein the resistances of the constant resistors (5) follow the law of a diverging geometric series.

9. The electric circuit (1) according to claim 8, wherein, for the resistances R₁, ..., Rₙ of the constant resistors (5), the following formula applies ${R}_{1} {\sum }_{k = 0}^{n} {q}^{k} = \left\{{R}_{1},…,{R}_{n}\right\}$ wherein
R₁ constitutes the resistances of the constant resistor (5) with the lowest resistance,
Rₙ constitutes the resistances of the constant resistor (5) with the highest resistance and
q is any value greater than 1.

10. An electric circuit board (7) for installation in a charging plug connector (3) for an electric or hybrid vehicle, comprising an electric circuit (1) according to any of the preceding claims.

11. The electric circuit board (7) according to claim 10, wherein the temperature-based resistors (4) are arranged at thermal contact points of the electric circuit board (7) for thermally contacting a corresponding charging contact (2) of the charging plug connector (3), and the thermal contact points are provided with thermal contact elements (8) which are in direct thermal contact with a corresponding temperature-based resistor (4) and by means of which the charging contacts (2) can be physically contacted.

12. The electric circuit board (7) according to claim 11, wherein the thermal contact points are formed by recesses (10) in the electric circuit board (7).

13. A charging plug connector (3) for an electric or hybrid vehicle comprising an electric circuit (1) according to any of claims 1 to 10 or comprising an electric circuit board (7) according to claim 12.

14. The charging plug connector (3) according to claim 13, wherein the temperature-based resistors (4) are arranged in such a way that they can be used to detect the corresponding temperature of an AC charging contact (2).

15. The charging plug connector according to either claim 13 or claim 14, wherein the charging plug connector (3) is designed as a built-in charging plug that can be installed in the body of an electric or hybrid vehicle.

## Revendications

1. Circuit électrique (1) pour la surveillance de la température respective d'une pluralité de contacts de charge (2) d'un connecteur de charge (3) pour un véhicule électrique ou hybride,
comportant une pluralité de résistances dépendant de la température (4), lesquelles sont respectivement associées à un contact de charge (2) et peuvent être accouplées thermiquement à celui-ci, et
une pluralité de résistances constantes (5) comportant respectivement une valeur de résistance constante,
dans lequel chaque résistance dépendant de la température (4) est connectée à l'une des résistances constantes (5), **caractérisé en ce que**
un montage en parallèle est prévu, conformément auquel les connexions constituées d'une résistance dépendant de la température (4) respective et d'une résistance constante (5) respective sont montées en parallèle les unes par rapport aux autres,
les résistances constantes (5) présentent toutes des valeurs de résistances différentes les unes des autres et
un dispositif de mesure de tension (6) est prévu, avec lequel la tension chutant aux bornes du circuit parallèle peut être déterminée.

2. Circuit électrique (1) selon la revendication 1, dans lequel
l'une des résistances constantes (5) est montée en série avec chaque résistance dépendant de la température (4) et
un montage en parallèle est prévu, conformément auquel les montages en série constitués d'une résistance dépendant de la température (4) respective et d'une résistance constante (5) respective sont montés en parallèle les uns par rapport aux autres.

3. Circuit électrique (1) selon la revendication 1, comportant en outre une pluralité de transistors (9),
dans lequel sont prévus des connexions (11) conformément auxquelles respectivement une résistance dépendant de la température (4) est connectée à la base d'un transistor (9) respectif et les résistances constantes (5) sont montées en série avec respectivement un transistor (9) par l'intermédiaire des deux autres bornes de celui-ci et
un circuit parallèle est prévu, conformément auquel les connexions (11) constituées de respectivement une résistance constante (5), de respectivement un transistor (9) et de respectivement une résistance dépendant de la température (4) sont montées en parallèle les unes par rapport aux autres.

4. Circuit électrique (1) selon l'une des revendications précédentes, dans lequel les résistances dépendant de la température (4) sont toutes du même type et présentent la même dépendance de leur résistance par rapport à la température.

5. Circuit électrique (1) selon l'une des revendications précédentes, dans lequel la valeur de résistance de la résistance constante (5) comportant la seconde valeur de résistance la plus faible est au moins deux fois plus grande que la valeur de résistance de la résistance constante (5) comportant la valeur de résistance la plus faible.

6. Circuit électrique (1) selon la revendication 5, dans lequel la différence respective entre les valeurs de résistances de toutes les résistances constantes (5) correspond au moins à la différence entre la valeur de résistance de la résistance constante (5) comportant la seconde valeur de résistance la plus faible et la valeur de résistance de la résistance constante (5) comportant la valeur de résistance la plus faible.

7. Circuit électrique (1) selon la revendication 5 ou 6, dans lequel, à l'exception de la résistance constante (5) comportant la valeur de résistance la plus faible, la valeur de résistance de chaque résistance constante (5) est au moins le double de la valeur de résistance de la résistance constante (5) comportant la valeur de résistance immédiatement inférieure.

8. Circuit électrique (1) selon l'une des revendications 5 à 7, dans lequel les valeurs de résistances des résistances constantes (5) suivent la loi d'une série géométrique divergente.

9. Circuit électrique (1) selon la revendication 8, dans lequel la formule suivante s'applique pour les valeurs de résistances R₁, ..., Rₙ des résistances constantes (5) ${R}_{1} {\sum }_{k = 0}^{n} {q}^{k} = \left\{{R}_{1},…,{R}_{n}\right\}$ dans lequel
R₁ représente la valeur de résistance de la résistance constante (5) comportant la valeur de résistance la plus faible,
Rₙ représente la valeur de résistance de la résistance constante (5) comportant la valeur de résistance la plus élevée et
q représente une valeur quelconque supérieure à 1.

10. Carte de circuit imprimé électrique (7) destinée à être montée dans un connecteur de charge (3) pour un véhicule électrique ou hybride, comportant un circuit électrique (1) conformément à l'une des revendications précédentes.

11. Carte de circuit imprimé électrique (7) selon la revendication 10, dans laquelle les résistances dépendant de la température (4) sont disposées en des points de contact thermiques de la carte de circuit imprimé électrique (7) pour la mise en contact thermique avec un contact de charge (2) respectif du connecteur de charge (3) et les points de contact thermiques sont pourvus d'éléments de contact thermiques (8) qui sont en contact thermique direct avec une résistance dépendant de la température (4) respective et avec lesquels les contacts de charge (2) peuvent être mis en contact physique.

12. Carte de circuit imprimé électrique (7) selon la revendication 11, dans laquelle les points de contact thermiques sont formés par des évidements (10) dans la carte de circuit imprimé électrique (7).

13. Connecteur de charge (3) pour un véhicule électrique ou hybride comportant un circuit électrique (1) conformément à l'une des revendications 1 à 10 ou comportant une carte de circuit imprimé électrique (7) conformément à la revendication 12.

14. Connecteur de charge (3) selon la revendication 13, dans lequel les résistances dépendant de la température (4) sont disposées de telle sorte qu'avec celles-ci, la température respective d'un contact de charge à courant alternatif (2) peut être détectée.

15. Connecteur de charge selon la revendication 13 ou 14, dans lequel le connecteur de charge (3) est conçu comme un connecteur de charge encastrable pouvant être installé dans la carrosserie d'un véhicule électrique ou hybride.
